# EUROPÄISCHE PATENTSCHRIFT

(11) **EP 1 631 738 B1**
(45) Veröffentlichungstag und Bekanntmachung des Hinweises auf die Patenterteilung: **10.04.2013**
(21) Anmeldenummer: 04741639.1
(22) Anmeldetag: 24.05.2004
(51) Int. Cl.: F02D 41/02, F01N 3/023, F01N 3/08

(54) **VERFAHREN ZUM BETREIBEN EINES IN EINEM ABGASBEREICH EINER BRENNKRAFTMASCHINE ANGEORDNETEN BAUTEILS UND VORRICHTUNG ZUR DURCHFÜHRUNG DES VERFAHRENS**
METHOD FOR THE OPERATION OF A PART DISPOSED IN AN EXHAUST ZONE OF AN INTERNAL COMBUSTION ENGINE, AND DEVICE FOR CARRYING OUT SAID METHOD
PROCEDE PERMETTANT DE FAIRE FONCTIONNER UN COMPOSANT PLACE DANS UNE ZONE D'ECHAPPEMENT D'UN MOTEUR A COMBUSTION INTERNE ET DISPOSITIF CORRESPONDANT

(30) Priorität: 26.05.2003 DE 10323561
(43) Veröffentlichungstag der Anmeldung: 08.03.2006
(73) Patentinhaber: ROBERT BOSCH GMBH, 70442 Stuttgart (DE)
(72) Erfinder: PFAEFFLE, Andreas, 71543 Wuestenrot (DE); WIRTH, Ralf, 71229 Leonberg (DE); WUEST, Marcel, 70825 Korntal (DE)
(86) Internationale Anmeldenummer: PCT/EP2004/050901
(87) Internationale Veröffentlichungsnummer: WO 2004/104395

(56) Entgegenhaltungen:
- EP-A- 0 859 132
- EP-A- 1 195 508
- DE-A- 10 056 017
- DE-A- 19 843 879
- DE-A- 19 906 287

## Beschreibung

### Stand der Technik

Die Erfindung geht aus von einem Verfahren zum Betreiben eines in einem Abgasbereich einer Brennkraftmaschine angeordneten Bauteils und einer Vorrichtung zur Durchführung des Verfahrens nach der Gattung der unabhängigen Ansprüche.

In der DE 199 06 287 A1 ist ein Verfahren zum Regenerieren eines in einem Abgasbereich einer Brennkraftmaschine angeordneten Partikelfilters beschrieben, bei dem zwischen verschiedenen Betriebszuständen in Abhängigkeit vom zuletzt vorliegenden Betriebszustand und in Abhängigkeit vom Zustand des Partikelfilters gewechselt wird. In einem Betriebszustand erfolgt eine Regeneration des Partikelfilters von den eingelagerten Partikeln.

Die Regeneration findet bei einer erhöhten Temperatur statt, bei der die Partikel, hauptsächlich Rußpartikel und Aschepartikel, durch eine Oxidationsreaktion verbrannt werden. Im durchschnittlichen Betrieb der Brennkraftmaschine liegt die Temperatur des Partikelfilters in einem Temperaturbereich von beispielsweise 150 bis 300 Grad Celsius, im Allgemeinen also unterhalb der für die Regeneration benötigten Temperatur. Im Allgemeinen sind deshalb spezielle Heizmaßnahmen erforderlich, um die Regeneration einzuleiten. Die erforderliche Temperatur kann beispielsweise über eine Erhöhung der Temperatur des Abgases der Brennkraftmaschine erreicht werden. Da das Abgas neben dem Partikelfilter gegebenenfalls vorhandene weitere Bauteile, also den Abgasbereich insgesamt aufheizen muss, können bis zum Start der Regeneration bereits einige Minuten vergehen. Für die Dauer der Regeneration, die vom Beladungszustand des Partikelfilters sowie von dessen Größe abhängt, sind derzeit bis zu 25 Minuten zu veranschlagen.

Sofern die Brennkraftmaschine in einem Kraftfahrzeug angeordnet ist, sind Situationen denkbar, in denen eine vollständige Regeneration des Partikelfilters nicht möglich ist oder nicht einmal begonnen werden kann. Solche Situationen sind zum einen Fehlerzustände wie beispielsweise eine Motorölverdünnung durch eine vorangegangene Regeneration. Zum anderen können Betriebszustände der Brennkraftmaschine vorliegen, bei denen die Brennkraftmaschine noch nicht einmal ihre eigene Nenn-Betriebstemperatur erreicht. Ein solcher Betriebszustand tritt im beispielsweise im Kurzstreckenbetrieb des Kraftfahrzeugs auf. In diesem Fall wird ein Regenerationsvorgang gegebenenfalls abgebrochen oder erst gar nicht gestartet.

In der DE 198 43 879 A1 ist ein Betriebsverfahren einer Brennkraftmaschine beschrieben, in deren Abgasbereich ein NOx-Speicherkatalysator angeordnet ist. In einer ersten Betriebsphase, in welcher die Brennkraftmaschine im Rahmen einer geschichteten Zylinderfüllung mager betrieben wird, erfolgt eine Einlagerung des entstehenden NOx in den NOx-Speicherkatalysator. In einer zweiten Betriebsphase, in welcher die Brennkraftmaschine im Rahmen einer homogenen Zylinderfüllung stöchiometrisch oder fett betrieben wird, erfolgt eine Regeneration des NOx-Speicherkatalysators. Wie beim Partikelfilter erfolgt die Regeneration des NOx-Speicherkatalysators bei gegenüber normalen Betriebsbedingungen erhöhten Katalysator-Temperaturen, die mit speziellen Katalysator-Heizmaßnahmen erreicht werden können. Die Dauer der Regeneration des NOx-Speicherkatalysators liegt im Sekundenbereich und ist damit im Vergleich zur Dauer der Regeneration eines Partikelfilters erheblich kürzer. Dennoch treten auf Grund der erforderlichen Heizmaßnahmen prinzipiell dieselben Probleme wie bei der Regeneration des Partikelfilters auf. Es sind auch hier Situationen denkbar, in denen die Regeneration abgebrochen oder erst gar nicht gestartet wird.

In der Offenlegungsschrift EP 0 859 132 A1 ist ein Verfahren zum Betreiben eines in einem Abgasbereich einer Brennkraftmaschine angeordneten NOx-Speicherkatalysators oder Partikelfilter beschrieben, in welche in einer ersten Betriebsphase eine Abgaskomponente eingelagert und welche in einer zweiten Betriebsphase von der eingelagerten Abgaskomponente regeneriert werden. Die zweite Betriebsphase wird in Abhängigkeit vom Betriebszustand der Brennkraftmaschine und/oder vom Beladungszustand des Bauteils gestartet. Ueiterhin kann die zweite Betriebsphase von einem Signal eines im Kraftfahrzeug angeordneten Navigationgeräts gestartet werden.

In der Offenlegungsschrift EP 1195 509 A1 ist ebenfalls ein Verfahren zum Betreiben eines in einem Abgasbereich einer Brennkraftmaschine angeordneten Bauteils beschrieben, in welches in einer ersten Betriebsphase eine Abgaskomponente eingelagert und welches in einer zweiten Betriebsphase von der eingelagerten Abgaskomponente regeneriert wird. Die zweite Betriebsphase kann von einem Signal einer im Kraftfahrzeug vorhandenen Getriebesteuerung oder von einem im Kraftfahrzeug angeordneten Signal eines Navigationsgeräts gestartet werden.

Der Erfindung liegt die Aufgabe zugrunde, ein Verfahren zum Betreiben eines in einem Abgasbereich einer Brennkraftmaschine angeordneten Bauteils und eine Vorrichtung zur Durchführung des Verfahrens anzugeben, welche die Betriebsbereitschaft des Bauteils sicherstellen.

Die Aufgabe wird durch die in den unabhängigen Ansprüchen angegebenen Merkmale gelöst.

### Vorteile der Erfindung

Das Verfahren und die Vorrichtung zur Durchführung des Verfahrens sehen vor, dass in einer ersten Betriebsphase eine Abgaskomponente der Brennkraftmaschine in ein in einem Abgasbereich der Brennkraftmaschine angeordnetes Bauteil eingelagert und dass in einer zweiten Betriebsphase das Bauteil von der eingelagerten Abgaskomponente regeneriert wird. Die zweite Betriebsphase wird in Abhängigkeit vom Betriebszustand des Bauteils und/oder in Abhängigkeit vom Betriebszustand der Brennkraftmaschine gestartet. Erfindungsgemäß ist vorgesehen, dass die zweite Betriebsphase unabhängig vom Betriebszustand der Brennkraftmaschine und/oder vom Beladungszustand des Bauteils weiterhin von einem externen Startsignal gestartet wird, welches von einem Diagnosegerät bereitgestellt wird.

Die erfindungsgemäße Maßnahme ermöglicht es, die Betriebsbereitschaft des Bauteils dadurch sicherzustellen, dass die zweite Betriebsphase, in der das Bauteil von der eingelagerten Abgaskomponente regeneriert wird, willkürlich mit dem externen Startsignal des Diagnosegeräts gestartet werden kann. Der regenerierte Zustand des Bauteils kann auf Wunsch beispielsweise von einer Bedienperson hergestellt werden. Der Wunsch kann beim Service der Brennkraftmaschine und der ihr zugeordneten Komponenten auftreten. Sofern die Brennkraftmaschine in einem Kraftfahrzeug angeordnet ist, kann die Forderung im Rahmen von Werkstattaufenthalten auftreten. Die erfindungsgemäße Maßnahme ermöglicht es, das Bauteil in einen definierten Zustand zu setzen, der dem regenerierten Zustand entspricht. In dieser Anwendung ermöglicht die erfindungsgemäße Maßnahme die Diagnose der Brennkraftmaschine und der ihr zugeordneten Komponenten, ausgehend von einem regenerierten Zustand des Bauteils. Der zuvor möglicherweise eingeschränkte Fahrbetrieb des Kraftfahrzeugs kann wieder hergestellt werden.

Vorteilhafte Weiterbildungen und Ausgestaltungen des erfindungsgemäßen Verfahrens und der erfindungsgemäßen Vorrichtung zur Durchführung des Verfahrens ergeben sich aus abhängigen Ansprüchen.

Eine erste Weiterbildung sieht vor, dass das externe Startsignal über eine Diagnoseschnittstelle geführt wird. Diagnoseschnittstellen sind heute bereits üblicherweise vorhanden, sofern die Brennkraftmaschine in einem Kraftfahrzeug angeordnet ist. In dieser Anwendung werden genormte Schnittstellen in Zukunft gesetzlich vorgeschrieben, sodass von einer zunehmenden Verfügbarkeit ausgegangen werden kann. Das Diagnosegerät kann bei vorhandener Diagnoseschnittstelle in einfacher Weise kontaktiert werden.

Eine andere Weiterbildung sieht vor, dass die zweite Betriebsphase bei Vorliegen dem externen Startsignal nur gestartet wird, wenn gleichzeitig wenigstens eine weitere Bedingung erfüllt ist.

Eine Bedingung ist beispielsweise, dass die Temperatur und/oder die Drehzahl der Brennkraftmaschine in einem vorgegebenen Bereich liegt. Eine weitere Bedingung ist beispielsweise, dass die Geschwindigkeit eines Kraftfahrzeugs gleich null ist. Eine weitere Bedingung ist beispielsweise, dass ein Leistungsvorgabesignal der Brennkraftmaschine einem Leerlaufwert entspricht, bei dem die Brennkraftmaschine zumindest im Bereich ihrer Leerlaufdrehzahl liegt. Eine weitere Bedingung ist beispielsweise, dass ein in einer Steuerung der Brennkraftmaschine enthaltener Leerlaufregler im eingeschwungenen Zustand ist, bei dem die Leerlaufdrehzahlregelung der Brennkraftmaschine wenigstens näherungsweise konstant gehalten wird.

Eine Ausgestaltung des erfindungsgemäßen Verfahrens und der erfindungsgemäßen Vorrichtung zur Durchführung des Verfahrens sieht vor, dass in der zweiten Betriebsphase der Brennkraftmaschine eine Erhöhung der Temperatur des Abgases der Brennkraftmaschine vorgesehen ist.

Das erfindungsgemäße Verfahren und die erfindungsgemäße Vorrichtung zur Durchführung des Verfahrens eignen sich insbesondere zur Herstellung der Betriebsbereitschaft eines als Speicherkatalysator ausgestalteten Katalysators, insbesondere eines NOx-Speicherkatalysators und/oder eines Partikelfilters, vorzugsweise eines Diesel-Partikelfilters.

Weitere vorteilhafte Weiterbildungen und Ausgestaltungen des erfindungsgemäßen Verfahrens und der erfindungsgemäßen Vorrichtung zur Durchführung des Verfahrens ergeben sich aus weiteren abhängigen Ansprüchen und aus der folgenden Beschreibung.

### Zeichnung

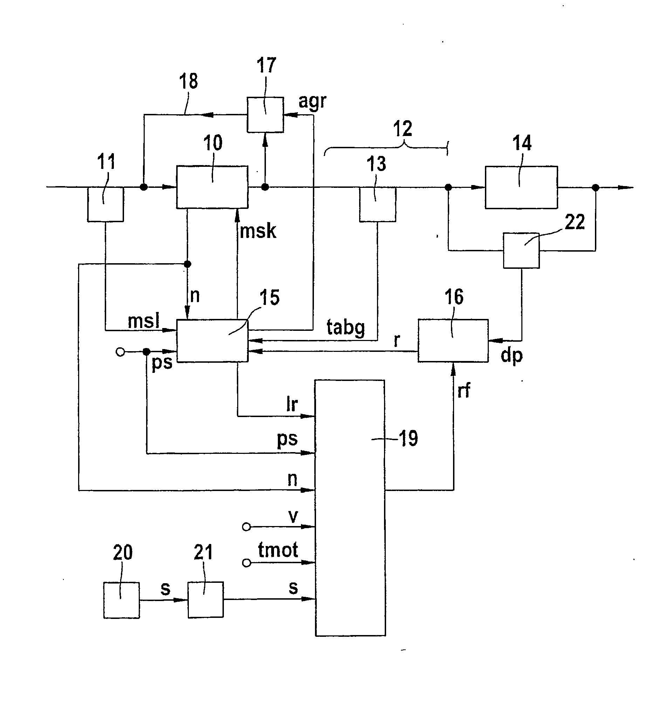

Die Figur zeigt ein technisches Umfeld, in welchem ein erfindungsgemäßes Verfahren abläuft.

Die Figur zeigt eine Brennkraftmaschine 10, in deren Ansaugbereich ein Luftmassenstromsensor 11 und in deren Abgasbereich 12 ein Temperatursensor 13 und ein Bauteil 14 angeordnet sind. Der Luftmassenstromsensor 11 gibt ein Luftmassenstromsignal msl an eine Steuerung 15 ab. Der Temperatursensor 13 stellt eine Temperatur tabg des Abgases der Brennkraftmaschine 10 der Steuerung 15 zur Verfügung.

Der Steuerung 15 wird weiterhin ein Leistungssollsignal ps, ein Drehzahlsignal n der Brennkraftmaschine 10 sowie ein von einer Regeneriersteuerung 16 bereitgestelltes Regeneriersignal r zugeführt. Die Steuerung 15 gibt an die Brennkraftmaschine 10 ein Kraftstoffzumesssignal msk, an ein Abgasrückführventil 17, welches eine zurückgeführte Abgasmenge 18 festgelegt, ein Abgasrückführsignal agr und an einen Bedingungsprüfer 19 ein Leerlaufreglersignal Ir ab.

Das Drehzahlsignal n und das Leistungssollsignal ps werden weiterhin dem Bedingungsprüfer 19 zur Verfügung gestellt. Der Bedingungsprüfer 19 erhält weiterhin ein Geschwindigkeitssignal v, ein Motortemperatursignal tmot und ein externes Startsignal s zugeführt. Das externe Startsignal s wird von einem Diagnosegerät 20 bereitgestellt und über eine Diagnoseschnittstelle 21 an den Bedingungsprüfer 19 weitergeleitet.

Der Bedingungsprüfer 19 gibt ein Regenerierfreigabesignal rf an die Regeneriersteuerung 16 ab. Der Regeneriersteuerung 16 wird weiterhin ein Differenzdrucksignal dp zugeführt, das ein Differenzdrucksensor 22 bereitstellt, der die Druckdifferenz des Abgases vor und hinter dem Bauteil 14 erfasst.

Das erfindungsgemäße Verfahren und die erfindungsgemäße Vorrichtung zur Durchführung des Verfahrens arbeiten folgendermaßen:
Die Steuerung 15 legte in Abhängigkeit vom Leistungssollsignal ps die der Brennkraftmaschine 10 zuzuführende Kraftstoffmenge mit dem Kraftstoffmengensignal msk fest, welches einem nicht näher gezeigten Kraftstoffzumesssystem zugeführt wird. Berücksichtigt wird hierbei das Luftmassenstromsignal msl, welches der Luftmassenstromsensor 11 bereitstellt, der im Ansaugbereich der Brennkraftmaschine 10 angeordnet ist. Sofern es sich bei der Brennkraftmaschine 10 um eine Diesel-Brennkraftmaschine handelt, werden prinzipiell keine weiteren Eingangsgrößen zur Festlegung des Kraftstoffmengensignals msk benötigt. Gegebenenfalls ist ein nicht näher gezeigter Abgassensor vorgesehen, der ein Lambdasignal als Maß für das Luft-Kraftstoff-Verhältnis im Abgas der Brennkraftmaschine 10 an die Steuerung 15 abgibt. Weiterhin nicht gezeigt ist eine gegebenenfalls vorhandene Drosselklappe im Ansaugbereich der Brennkraftmaschine 10, die entweder ein Drosselklappensignal an die Steuerung 15 abgibt oder die von der Steuerung 15 angesteuert wird.

Die Konzentration der Stickoxide im Abgas der Brennkraftmaschine 10 sowie die Temperatur tabg des Abgases kann mit der zurückgeführten Abgasmenge 18 beeinflusst werden, welche die Steuerung 15 über das Abgasrückführventil 17 mit dem Abgasrückführsignal agr steuert.

Das Bauteil 14 ist beispielsweise ein Speicherkatalysator, der eine vorgegebene Abgaskomponente in einer ersten Betriebsphase eingelagert. Im eingangs genannten Stand der Technik ist der Speicherkatalysator als NOx-Speicherkatalysator ausgestaltet, der in der ersten Betriebsphase der Brennkraftmaschine 10 die im Abgas enthaltenen Stickoxide einlagert. Da die Speicherkapazität eines derartigen Speicherkatalysators begrenzt ist, muss der Speicherkatalysator in einer zweiten Betriebsphase gelegentlich regeneriert werden. Die Notwendigkeit für diese Generation kann in der Regeneriersteuerung 16 beispielsweise anhand der im Speicherkatalysator eingelagerten NOx-Masse, der hinter dem Speicherkatalysator auftretenden NOx-Masse, des vor und hinter dem Speicherkatalysator auftretenden NOx-Massenstroms oder anhand anderer Kriterien festgestellt werden. Das Auftreten des Regeneriersignals r zeigt die erforderliche Regeneration des Bauteils 14 an. Ein Wechsel von der ersten zur zweiten Betriebsphase kann dann unmittelbar veranlasst werden. Die Steuerung 15 kann allerdings anhand von festgestellten Betriebsbedingungen der Brennkraftmaschine 10 den an sich erforderlichen Wechsel verhindern.

Im gezeigten Ausführungsbeispiel ist das Bauteil 14 ein Partikelfilter, insbesondere ein Diesel-Partikelfilter, das die im Abgas der Brennkraftmaschine 10 enthaltenen Rußpartikel in der ersten Betriebsphase eingelagert. Die Regeneriersteuerung 16 kann den Beladungszustand des Partikelfilters beispielsweise anhand der auftretenden Druckdifferenz des Abgases vor und hinter dem Partikelfilter ermitteln. Die Druckdifferenz wird vom Differenzdrucksensor 22 gemessen und als Differenzdrucksignal dp bereitgestellt. Übersteigt die Belastungsgrenze des Partikelfilters ein vorgegebenes Maß, dann gibt die Regeneriersteuerung 16 das Regeneriersignal r an die Steuerung 15 ab. Auch bei diesem Ausführungsbeispiel kann ein Wechsel von der ersten zur zweiten Betriebsphase unmittelbar veranlasst werden. Die Steuerung 15 kann allerdings auch hier anhand von festgestellten Betriebsbedingungen der Brennkraftmaschine 10 den an sich erforderlichen Wechsel verhindern.

Solche Betriebsbedingungen sind beispielsweise ein Betrieb der Brennkraftmaschine 10 während der Warmlaufphase, wobei die Temperatur tmot der Brennkraftmaschine 10 beispielsweise von einem nicht näher gezeigten Temperatursensor gemessen werden kann, der beispielsweise im Kühlwasser, am Zylinderblock oder im Ölkreislauf angeordnet ist. Ein Wechsel zur zweiten Betriebsphase wird beispielsweise weiterhin verhindert, wenn die Brennkraftmaschine 10 im Leerlaufbetrieb ist. In diesem Betriebszustand ist die Temperatur tabg des Abgases so niedrig, dass der Kraftstoffbedarf für eine Aufheizung des Bauteils 14 zu groß wäre. Ein Wechsel zur zweiten Betriebsphase wird beispielsweise weiterhin verhindert, wenn der zeitliche Abstand zu einer vorangegangenen zweiten Betriebsphase zu kurz ist. Zu berücksichtigen ist hierbei, dass eine Ölverdünnung während der zweiten Betriebsphase durch ein Heizverfahren auftreten kann, bei dem eine Nacheinspritzung von Kraftstoff vorgesehen ist, der zum Teil an den Zylinderwänden der Brennkraftmaschine 10 kondensiert und ins Motoröl gelangt. Beim Vorliegen dieser Betriebssituationen wird die zweite Betriebsphase erst gar nicht gestartet. Weiterhin muss damit gerechnet werden, dass die zweite Betriebsphase nicht abgeschlossen werden kann. Dieser Fall tritt auf, wenn die Brennkraftmaschine 10 während des Vorliegens der zweiten Betriebsphase abgeschaltet wird.

Erfindungsgemäß ist vorgesehen, dass die zweite Betriebsphase unabhängig von den Betriebszuständen der Brennkraftmaschine 10 und/oder des Zustands des Bauteils 14 mit dem externen Startsignal s gestartet werden kann, das vom Diagnosegerät 20 bereitgestellt wird. Die. Das externe Startsignal s kann beispielsweise von einem Servicetechniker im Rahmen einer Wartung veranlasst werden. Das externe Startsignal s ermöglicht es, das Bauteil 14 jederzeit in den regenerierten Zustand versetzen zu können. Die weitere Diagnose kann dann von einem definierten Ausgangszustand ausgehen.

Das externe Startsignal s könnte beispielsweise durch einfaches Kurzschließen eines Kontaktes, der beispielsweise mit der Steuerung 15 verbunden ist, erfolgen. Eine einfache Handhabung ergibt sich, wenn das Startsignal s über die Diagnoseschnittstelle 21 geführt wird. Eine derartige Diagnoseschnittstelle 21 ist häufig bereits heute verfügbar. Künftig erhöht sich die Verfügbarkeit der Diagnoseschnittstelle 21 auf Grund gesetzlicher Vorschrift. Das Diagnosegerät 20 wird mit der Diagnoseschnittstelle 21 kontaktiert. Die Diagnoseschnittstelle 21 kann sowohl als mechanische Steckverbindung als auch als Funkverbindung realisiert sein.

In einer einfachen Ausgestaltung kann das externe Startsignal s unmittelbar den Start der zweiten Betriebsphase veranlassen, in welcher das Bauteil 14 regeneriert wird. Vorzugsweise ist jedoch der Bedingungsprüfer 19 vorgesehen, der bei vorliegendem externem Startsignal s zusätzlich prüft, ob vorgegebene Bedingungen vorliegen und der mit dem Regenerierfreigabesignal fr die zweite Betriebsphase nur freigibt, wenn wenigstens eine Bedingung erfüllt ist.

Eine erste Bedingung legt fest, dass die Temperatur tmot der Brennkraftmaschine 10 einen Schwellenwert übersteigen muss. Eine andere Bedingung sieht vor, dass die Fahrgeschwindigkeit eines Kraftfahrzeugs, in welchem die Brennkraftmaschine 10 angeordnet ist, gleich null ist. Mit dieser Maßnahme wird überprüft, ob das externe Startsignal s tatsächlich während eines Serviceaufenthalts veranlasst wurde. Weiterhin kann überprüft werden, ob die Drehzahl n der Brennkraftmaschine 10 im Bereich der Leerlaufdrehzahl liegt. Besonders vorteilhaft ist eine Überprüfung, ob das Leistungssollsignal ps einem Wert entspricht, bei dem die Brennkraftmaschine 10 im Leerlauf betrieben wird. Das Leistungssollsignal ps wird beispielsweise von einem im Kraftfahrzeug angeordneten Fahrpedal bereitgestellt. Mit dieser Maßnahme wird gegebenenfalls zusätzlich sichergestellt, dass die Brennkraftmaschine 10 mit einer Drehzahl n im Leerlaufdrehzahlbereich betrieben wird. Mit dem Leerlaufreglersignal Ir kann darüber hinaus sichergestellt werden, dass die Brennkraftmaschine 10 mit einer Drehzahl n im Leerlaufdrehzahlbereich betrieben wird und dass keine Anforderung zur Änderung der Drehzahl vorliegt oder dass keine erhöhte Leerlaufdrehzahl vorliegt, wie sie beispielsweise während des Warmlaufs der Brennkraftmaschine vorgegeben werden kann. Der Bedingungsprüfer 19 bildet somit eine UND-Verknüpfung des externen Steuersignals s mit dem Vorliegen wenigstens einer Bedingung tmot, v, n, ps, Ir. Nur wenn die wenigstens eine Bedingung tmot, v, n, ps, Ir erfüllt ist, gibt der Bedingungsprüfer 19 das Regenerierfreigabesignal Fr an die Regeneriersteuerung 16 ab. Das Regenerierfreigabesignal Fr hat Vorrang gegenüber dem Differenzdrucksignal dp, das den Beladungszustand des Bauteils 14 anzeigt. Das Bereitstellen des Regeneriersignals r veranlasst die Steuerung 15 zum sofortigen Wechsel der Betriebsphase. Eine weitere Überprüfung von Bedingungen ist nicht mehr erforderlich, da die Bedingungen im Bedingungsprüfer 19 bereits als erfüllt festgestellt wurden.

Das Steuergerät 15 kann mit dem Wechsel zur zweiten Betriebsphase wenigstens eine gegebenenfalls erforderliche Heizmaßnahme einleiten. Beispielsweise kann die Temperatur tabg des Abgases erhöht werden, die der Temperatursensor 13 misst. Die Erhöhung der Temperatur tabg des Abgases kann beispielsweise durch Drosseln des der Brennkraftmaschine 10 zugeführten Luftstroms mittels der nicht näher gezeigten Drosselklappe erfolgen. Die Temperaturerhöhung kann auch durch eine Erhöhung der zurückgeführten Abgasmenge 18 erfolgen. Als weitere Maßnahme kann eine Erhöhung der Leerlauf Drehzahl der Brennkraftmaschine 10 vorgenommen werden. Eine andere Maßnahme sieht eine Nacheinspritzung von Kraftstoff vor, der in den Zylindern nur unvollständig verbrannt wird. Der unverbrannte Kraftstoff reagiert im Abgasbereich 12 mit vorhandenem Restsauerstoff exotherm. Diese Maßnahme kann mit einer nicht näher gezeigten Sekundärlufteinblasung wirkungsvoll unterstützt werden. Weiterhin kann eine nicht näher gezeigte unmittelbare elektrische Beheizung des Bauteils 14 vorgesehen sein.

Das Ende der zweiten Betriebsphase wird mit den bereits beschriebenen Maßnahmen detektiert. Die zweite Betriebsphase wird dann mit dem Wechsel in die erste Betriebsphase beendet. Mit dem Ende der zweiten Betriebsphase, also dem Abschluss der Regeneration, wird die Einsatzbereitschaft des Bauteils 14 wieder hergestellt.

## Patentansprüche

1. Verfahren zum Betreiben eines in einem Abgasbereich (12) einer Brennkraftmaschine (10) angeordneten Bauteils (14), in welches in einer ersten Betriebsphase eine Abgaskomponente eingelagert und welches in einer zweiten Betriebsphase von der Abgaskomponente regeneriert wird, wobei die zweite Betriebsphase in Abhängigkeit vom Betriebszustand der Brennkraftmaschine (10) und/oder vom Beladungszustand des Bauteils (14) gestartet wird, **dadurch gekennzeichnet, dass** die zweite Betriebsphase weiterhin unabhängig vom Betriebszustand der Brennkraftmaschine (10) und/oder vom Beladungszustand des Bauteils (14) von einem externen Startsignal (s) gestartet wird, welches von einem Diagnosegerät (20) bereitgestellt wird.

2. Verfahren nach Anspruch 1, **dadurch gekennzeichnet, dass** das externe Startsignal (s) über eine Diagnoseschnittstelle (21) geführt wird.

3. Verfahren nach Anspruch 1, **dadurch gekennzeichnet, dass** die zweite Betriebsphase bei vorliegendem externem Startsignal (s) nur gestartet wird, wenn gleichzeitig wenigstens eine Bedingung (tmot, v, n, ps, Ir) erfüllt ist.

4. Verfahren nach Anspruch 3, **dadurch gekennzeichnet, dass** die Temperatur (tmot) der Brennkraftmaschine (10) einen vorgegebenen Schwellenwert übersteigen muss und/oder das die Fahrgeschwindigkeit eines Kraftfahrzeugs, in welchem die Brennkraftmaschine (10) angeordnet ist, gleich null ist.

5. Verfahren nach Anspruch 3 und 4, **dadurch gekennzeichnet, dass** die Drehzahl (n) der Brennkraftmaschine (10) der Leerlaufdrehzahl entsprechen muss.

6. Verfahren nach einem der Ansprüche 3 bis 5, **dadurch gekennzeichnet, dass** ein Leistungsvorgabesignal (ps) für die Leistung der Brennkraftmaschine (10) einem Wert entsprechen muss, welcher nur für das Aufrechterhalten der Leerlaufdrehzahl der Brennkraftmaschine (10) ausreicht.

7. Verfahren nach einem der Ansprüche 3 bis 6, **dadurch gekennzeichnet, dass** das von einem Leerlaufregler bereitgestellte Leerlaufreglersignal (Ir) im eingeschwungenen Zustand sein muss.

8. Vorrichtung zum Betreiben eines in einem Abgasbereich (12) einer Brennkraftmaschine (10) angeordneten Bauteils (14), **dadurch gekennzeichnet, dass** eine Steuerung (15) sowie ein Bedingungsprüfer (19) vorgesehen sind, welche ein Verfahren nach einem der vorhergehenden Ansprüche durchführen.

9. Vorrichtung nach Anspruch 8, **dadurch gekennzeichnet, dass** als Bauteil (14) ein Speicherkatalysator vorgesehen ist.

10. Vorrichtung nach Anspruch 8, **dadurch gekennzeichnet, dass** als Bauteil (14) ein Partikelfilter, vorzugsweise ein Diesel-Partikelfilter vorgesehen ist.

## Claims

1. Method for operating a component (14) which is arranged in an exhaust-gas region (12) of an internal combustion engine (10) and in which an exhaust-gas component is accumulated in a first operating phase and which is regenerated with regard to the exhaust-gas component in a second operating phase, wherein the second operating phase is started as a function of the operating state of the internal combustion engine (10) and/or of the loading state of the component (14), **characterized in that** the second operating phase is furthermore started, independently of the operating state of the internal combustion engine (10) and/or of the loading state of the component (14), by an external start signal (s) which is provided by a diagnostic unit (20).

2. Method according to Claim 1, **characterized in that** the external start signal (s) is transmitted via a diagnostic interface (21).

3. Method according to Claim 1, **characterized in that** the second operating phase is started in the presence of the external start signal (s) only if at least one condition (tmot, v, n, ps, lr) is simultaneously met.

4. Method according to Claim 3, **characterized in that** the temperature (tmot) of the internal combustion engine (10) must exceed a predefined threshold value and/or **in that** the driving speed of a motor vehicle in which the internal combustion engine (10) is arranged is equal to zero.

5. Method according to Claim 3 and 4, **characterized in that** the rotational speed (n) of the internal combustion engine (10) must correspond to the idle rotational speed.

6. Method according to one of Claims 3 to 5, **characterized in that** a power setpoint signal (ps) for the power of the internal combustion engine (10) must correspond to a value which is sufficient only for maintaining the idle rotational speed of the internal combustion engine (10).

7. Method according to one of Claims 3 to 6, **characterized in that** the idle regulator signal (lr) provided by an idle regulator must be in the steady state.

8. Device for operating a component (14) arranged in an exhaust-gas region (12) of an internal combustion engine (10), **characterized in that** a controller (15) and a condition checker (19) are provided which carry out a method according to one of the preceding claims.

9. Device according to Claim 8, **characterized in that** a storage catalytic converter is provided as a component (14).

10. Device according to Claim 8, **characterized in that** a particle filter, preferably a diesel particle filter, is provided as a component (14).

## Revendications

1. Procédé permettant de faire fonctionner un composant (14) disposé dans une zone d'échappement (12) d'un moteur à combustion interne (10), dans lequel un composant d'échappement est stocké au cours d'une première phase de fonctionnement et dans lequel ledit composant est régénéré par le composant d'échappement au cours d'une deuxième phase de fonctionnement, la deuxième phase de fonctionnement étant démarrée en fonction de l'état de fonctionnement du moteur à combustion interne (10) et/ou de l'état de charge du composant (14), **caractérisé en ce que** la deuxième phase de fonctionnement est en outre démarrée indépendamment de l'état de fonctionnement du moteur à combustion interne (10) et/ou de l'état de charge du composant (14) par le biais d'un signal de démarrage (s) externe amené par un appareil de diagnostic (20).

2. Procédé selon la revendication 1, **caractérisé en ce que** le signal de démarrage (s) externe est amené par le biais d'une interface diagnostique (21).

3. Procédé selon la revendication 1, **caractérisé en ce que** la deuxième phase de fonctionnement n'est démarrée, en présence d'un signal de démarrage (s) externe, que lorsque simultanément au moins une condition (tmot, v, n, ps, lr) est remplie.

4. Procédé selon la revendication 3, **caractérisé en ce que** la température (tmot) du moteur à combustion interne (10) doit dépasser une valeur seuil prédéfinie et/ou que la vitesse d'avancée d'un véhicule automobile contenant le moteur à combustion interne (10) est égale à zéro.

5. Procédé selon les revendications 3 et 4, **caractérisé en ce que** la vitesse de rotation (n) du moteur à combustion interne (10) doit correspondre à la vitesse de rotation à vide.

6. Procédé selon l'une quelconque des revendications 3 à 5, **caractérisé en ce qu'**un signal de consigne de puissance (ps) concernant la puissance du moteur à combustion interne (10) doit correspondre à une valeur suffisant seulement au maintien de la vitesse de rotation à vide du moteur à combustion interne (10).

7. Procédé selon l'une quelconque des revendications 3 à 6, **caractérisé en ce que** le système de régulation d'état libre (Ir) mis à disposition par un régulateur d'état vide doit être dans l'état stationnaire.

8. Dispositif permettant de faire fonctionner un composant (14) disposé dans une zone d'échappement (12) d'un moteur à combustion interne (10), **caractérisé en ce qu'**un élément de commande (15) ainsi qu'un vérificateur de conditions (19) sont prévus permettant de mettre en oeuvre un procédé selon l'une quelconque des revendications précédentes.

9. Dispositif selon la revendication 8, **caractérisé en ce que** le composant (14) prévu est un catalyseur à accumulateur.

10. Dispositif selon la revendication 8, **caractérisé en ce que** le composant (14) prévu est un filtre à particules, de préférence un filtre à particules diesel.
